# EUROPÄISCHE PATENTSCHRIFT

(11) **EP 1 878 558 B1**
(45) Veröffentlichungstag und Bekanntmachung des Hinweises auf die Patenterteilung: **20.04.2011**
(21) Anmeldenummer: 07112191.7
(22) Anmeldetag: 10.07.2007
(51) Int. Cl.: B29C 51/38, B29C 51/42

(54) **Thermoformmaschine**
Thermoforming machine
Machine de thermoformage

(30) Priorität: 14.07.2006 DE 102006032862
(43) Veröffentlichungstag der Anmeldung: 16.01.2008
(73) Patentinhaber: GEISS Aktiengesellschaft, 96145 Sesslach (DE)
(72) Erfinder: Daum, Wolfgang, 96106 Ebern (DE)
(74) Vertreter: Peckmann, Ralf

(56) Entgegenhaltungen:
- EP-A- 0 352 466
- EP-A- 0 919 356
- EP-A- 1 306 180
- DE-A1- 4 033 534
- DE-A1-102005 039 691
- US-A- 3 868 209

## Beschreibung

Die vorliegende Erfindung bezieht sich auf eine Thermoformmaschine.

Thermoformmaschinen dienen im Allgemeinen einer Verformung einer Flachware aus einem Material, das im erwärmten Zustand mittels Formabschnitten mit darin angeordneten Hohlräumen verformbar ist, wobei eine Innenformgebung jedes Hohlraums einer Außenformgebung eines in dem Hohlraum zu bildenden Gegenstandes entspricht. Thermoformmaschinen sind hinlänglich bekannt und umfassen beispielsweise Materialbeladungseinrichtungen, Heizeinrichtungen, Formungseinrichtungen, Entladungseinrichtungen etc. Die Technologie, thermoplastische oder thermohärtbare Materialien mit relativ großen Abmessungen durch Thermoformen zu bearbeiten, hat sich als Antwort zunehmenden Bedarfs in unterschiedlichen Industrien entwickelt.

Der Anmelderin ist beispielsweise eine Thermoformmaschine bekannt, welche als "Twin Sheet Thermoformer", das heißt als Thermoformmaschine, bei welcher zwei Teile gleichzeitig gefertigt werden, ausgebildet ist. Die Thermoformmaschine weist hierbei eine obere und eine untere Platte auf, welche relativ zu einem Rahmen mittels Motoren höhenverstellbar sind. An der oberen Platte sind Hydraulikkolben angebracht, welche über Verbindungselemente mittels einer formschlüssigen Verbindung fest mit der unteren Platte verbunden werden können. Dabei werden die Kolbenstangen in zugehörige Gegenelemente eingeführt und mit diesen formschlüssig verriegelt. Durch Betätigung der Hydraulikkolben können somit die untere und die obere Platte fest gegeneinander gezogen werden.

An diesem Ansatz hat sich jedoch die Tatsache als nachteilig herausgestellt, dass sich auf Grund dieser formschlüssigen Anordnung bei Überschreiten einer vorbestimmten Zugkraft Schädigungen der Verbindungselemente ergeben, so dass diese ersetzt bzw. repariert werden müssen. In diesem Zeitraum ist die Thermoformmaschine nicht einsatzfähig und die Produktivität verringert sich nachteilig.

Die Druckschrift EP 0919356 A2 beschreibt eine Vakuumformmaschine zum Umformen von Formteilen. Die Vakuumformmaschine hat ein unteres Formwerkzeug, das in einem unteren gestellförmigen Maschinenaufbau angebracht ist, und ein oberes Formwerkzeug, das in einem oberen gestellförmigen Maschinenaufbau angebracht ist. Die Vakuumformmaschine besitzt ferner mindestens einen Kernzug-Verriegelungszylinder, welcher an dem unteren und oberen gestellförmigen Maschinenaufbau befestigt und mit einer zugehörigen Verriegelungseinrichtung verriegelbar ist, welche an dem anderen gestellförmigen Maschinenaufbau angebracht ist.

Es ist daher Aufgabe der vorliegenden Erfindung, eine verbesserte Thermoformmaschine zu liefern, welche eine geeignetere Kopplung der unteren und der oberen Platte für ein Zusammenziehen derselben zueinander gewährleistet.

Diese Aufgabe wird erfindungsgemäß durch eine Thermoformmaschine mit den Merkmalen des Patentanspruchs 1 gelöst.

Die der vorliegenden Erfindung zugrunde liegende Idee besteht darin, dass die Thermoformmaschine einen Rahmen; eine erste Platte und eine zweite Platte zum Aufnehmen von Formabschnitten, wobei zumindest eine der Platten relativ zu dem Rahmen verstellbar ist; Antriebsmittel zum Verstellen der Platten relativ zueinander; und einen Zugmechanismus zum Ziehen einer der Platten in Richtung der anderen Platte aufweist, wobei der Zugmechanismus mindestens eine an einer der Platten angebrachte Zugeinrichtung mit einer Zugstange aufweist, welche bei Verstellung der beiden Platten relativ zueinander mit einer zugeordneten, an der anderen der Platten angebrachten Klemmeinrichtung für eine kraftschlüssige Kopplung verklemmbar ist.

Somit weist die vorliegende Erfindung gegenüber dem oben genannten Ansatz den Vorteil auf, dass bei einem Überschreiten eines vorbestimmten Maximalwertes für die auf die entsprechende Platte wirkende Zugkraft eine Schädigung des Zugmechanismus bzw. der Verbindungselemente für eine Kopplung der beiden Platten nicht auftritt, da auf Grund der erfindungsgemäßen kraftschlüssigen Klemmverbindung die beiden miteinander kraftschlüssig verklemmten Elemente Relativbewegungen zueinander ausführen, das heißt bei einem Überschreiten eines vorbestimmten Maximalwertes für die auf die entsprechende Platte wirkende Zugkraft ein Durchrutschen der Zugstange, beispielsweise eine Kolbenstange, durch die zugeordnete Klemmeinrichtung gewährleistet wird, ohne dass die entsprechenden Elemente des Zugmechanismus zerstört bzw. beschädigt werden.

In den Unteransprüchen finden sich vorteilhafte Ausgestaltungen und Verbesserungen der im Patentanspruch 1 angegebenen Thermoformmaschine.

Die Thermoformmaschine weist eine obere Platte auf, welche durch einen Antriebsmotor und zugeordnete Spindeln, insbesondere Kugelrollspindeln, vertikal zu dem Rahmen gleichmäßig verstellbar ist. Analog weist die Thermoformmaschine zudem eine unterhalb der oberen Platte angeordnete untere Platte auf, welche vorzugsweise ebenfalls vertikal zu dem Rahmen mittels eines weiteren Antriebsmotors mit zugeordneten Spindeln, insbesondere Kugelrollspindeln, vertikal verstellbar ist. Somit können die obere und untere Platte in Abhängigkeit der jeweils verwendeten Formabschnitten entsprechend höhenverstellt und in geeignete Höhenlage zueinander gebracht werden.

Zudem sind die obere Platte und/oder die untere Platte mittels zugeordneter Verstellelemente vorzugsweise auch horizontal zu dem Rahmen verstellbar, so dass die jeweils verwendeten Formabschnitte der oberen und unteren Platten aufeinander eingestellt werden können.

Gemäß einer weiteren bevorzugten Weiterbildung sind mehrere, vorzugsweise vier, Kolbeneinrichtungen in Form von hydraulischen Zylindern an der oberen Platte und jeweils zugeordnete Klemmeinrichtungen, das heißt vorzugsweise vier Klemmeinrichtungen, in Form von Klemmzylindern an der unteren Platte entsprechend fest angebracht. Die Kolbeneinrichtungen bzw. die jeweiligen Kolbenstangen sind derart mit den jeweils zugeordneten Klemmeinrichtungen ausgerichtet, dass bei einer Verstellung der oberen und unteren Platte aufeinander zu die Kolbenstange einer Kolbeneinrichtung der oberen Platte in eine zugeordnete Klemmeinrichtung der unteren Platte einfährt und jeweils kraftschlüssig mit einer derartigen Klemmkraft verklemmbar ist, dass bei Überschreiten einer vorbestimmten Zugkraft die Kolbenstange aus den zugeordneten Klemmzylindern herausgleiten kann. Dadurch werden bei Überschreiten einer maximalen Zugkraft weder die Kolbenstange noch die Klemmeinrichtungen beschädigt.

Nach einer weiteren bevorzugten Weiterbildung wird nach Vorsehen der kraftschlüssigen Verbindungen zwischen den Kolbenstangen der Hydraulikkolben der oberen Platte und der zugeordneten Klemmeinrichtungen der unteren Platte durch Betätigen der Hydraulikzylinder die untere Platte in Richtung der oberen Platte mit einer vorbestimmten Zugkraft gezogen und eine Verformung des vorgesehen Materials durch die mit den Platten gekoppelten Formabschnitte gewährleistet.

Vorteilhaft sind die Klemmeinrichtungen jeweils als hydraulische oder pneumatische Klemmzylinder ausgebildet, welche jeweils eine Klemmbuchse mit einem Außenkonus und eine Klemmhülse mit einem Innenkonus aufweisen, wobei die Klemmbuchse in einem Gehäuse der Klemmeinrichtung axial fixiert und radial beweglich ist und die Klemmhülse in dem Gehäuse axial geführt ist und zum Verklemmen einer in der Klemmeinrichtung aufgenommenen Kolbenstange in axialer Richtung über die Klemmachse mittels pneumatischer oder hydraulischer Kraftbeaufschlagung schiebbar ist. Dadurch wird auf einfache und kostengünstige Weise eine kraftschlüssige Kopplung zwischen Kolbenstange und der zugeordneten Klemmeinrichtung bzw. der oberen Platte und der unteren Platte gewährleistet, wobei bei Überschreiten einer maximalen Zugkraft eine relative Verschiebung der miteinander gekoppelten Teile möglich ist und somit eine Schädigung verhindert werden kann.

Ferner weist die Thermoformmaschine vorzugsweise eine obere Heizeinrichtung, welche unterhalb der oberen Platte vorgesehen ist, und eine untere Heizeinrichtung auf, welche oberhalb der unteren Platte vorgesehen ist, wobei zumindest eine der Heizeinrichtungen mittels einer zugeordneten Verstelleinrichtung vertikal zu dem Rahmen verstellbar ist und mehrere unabhängige Heizabschnitte, vorzugsweise zwei nebeneinander angeordnete Heizabschnitte, umfasst.

Die Erfindung wird im Folgenden anhand von Ausführungsbeispielen unter Bezugnahme auf die beiliegenden Figuren der Zeichnung näher erläutet.

Von den Figuren zeigen:
- Fig. 1: eine schematische Vorderansicht einer Thermoformmaschine gemäß einem bevorzugten Ausführungsbeispiel der vorliegenden Erfindung; und
- Fig. 2: eine schematische Darstellung einer Klemmeinrichtung gemäß einem bevorzugten Ausführungsbeispiel der vorliegenden Erfindung in einem geklemmten bzw. gelösten Zustand.

In den Figuren der Zeichnung bezeichnen gleiche Bezugszeichen gleiche oder funktionsgleiche Komponenten, soweit nichts Gegenteiliges angegeben ist.

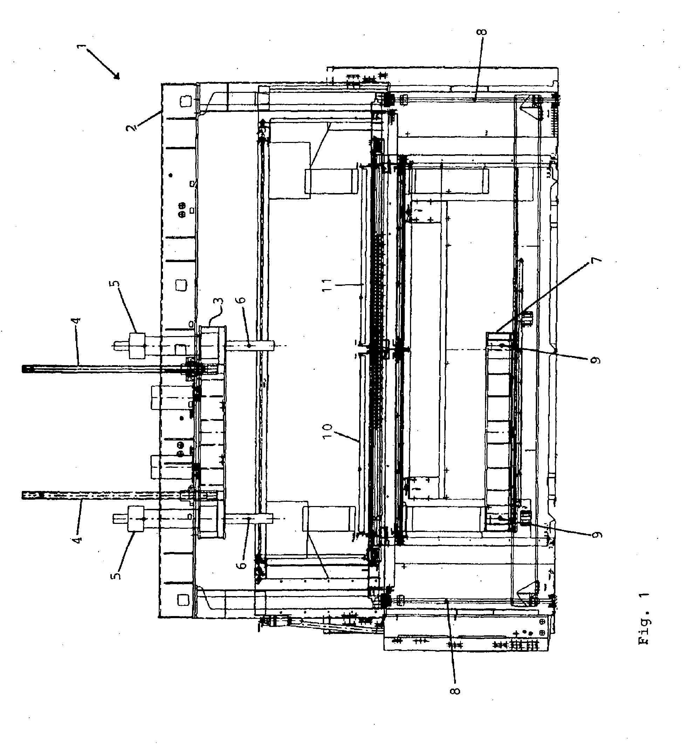

Bezugnehmend auf Fig. 1 weist eine Thermoformmaschine 1 gemäß dem vorliegenden Ausführungsbeispiel einen Rahmen 2 zum Tragen der einzelnen Komponenten der Thermoformmaschine 1 auf. Vorzugsweise umfasst die Thermoformmaschine 1 eine obere Platte 3, an welcher vorbestimmte Formabschnitte zur Formgebung des thermo zu formenden Materials angebracht sind. Die obere Platte 3 ist mittels eines zugeordneten Antriebsmotors und zugeordneter Kugelrollspindeln 4, vorzugsweise vertikal zu dem Rahmen 2 höhenverstellbar. Des Weiteren kann die obere Platte 3 bei Bedarf zusätzlich auch horizontal zu dem Rahmen 2 mittels geeigneter Antriebe und Verstellelemente verstellbar an dem Rahmen 2 gelagert sein.

Beispielsweise sind vier Kugelrollspindeln 4 vorgesehen, welche rechteckförmig bezüglich der oberen Platte 3 angeordnet sind und eine gleichförmige Höhenverstellung der oberen Platte 3 gewährleisten.

Wie in Fig. 1 ferner ersichtlich ist, weist die Thermoformmaschine 1 zudem vorzugsweise mehrere Hydraulikzylinder 5 auf, die fest mit der oberen Platte 3 gekoppelt sind. In den Hydraulikzylindern 4 können beispielsweise vorbestimmte und hinlänglich bekannte Wegmess-Systeme für eine Erfassung des Verstellweges integriert sein. Die jeweiligen Kolbenstangen 6 der einzelnen Hydraulikzylinder 5 ragen in einem auseinander gefahrenen Zustand der Thermoformmaschine 1, welcher in Fig. 1 beispielhaft dargestellt ist, unterhalb der oberen Platte 3 nach unten gerichtet vor.

Ferner umfasst die Thermoformmaschine 1 unter Bezugnahme auf Fig. 1 eine untere Platte 7, an welcher analog zur oberen Platte 3 vorbestimmte Formabschnitte angebracht sind, welche mit den Formabschnitten der oberen Platte 3 für eine Formgebung des thermozuformenden Materials korrespondieren. Die untere Platte 7 ist gemäß dem vorliegenden Ausführungsbeispiel über einen zugeordneten Antrieb und zugeordnete Kugelrollspindeln 8 vorzugsweise ebenfalls relativ zu dem Rahmen 2 vertikal höhenverstellbar, so dass die obere Platte 3 und die untere Platte 3 relativ zueinander und aufeinander zu gerichtet in Abhängigkeit der jeweils verwendeten Formabschnitte bzw. in Abhängigkeit des herzustellenden Formwerkstücks verstellbar sind.

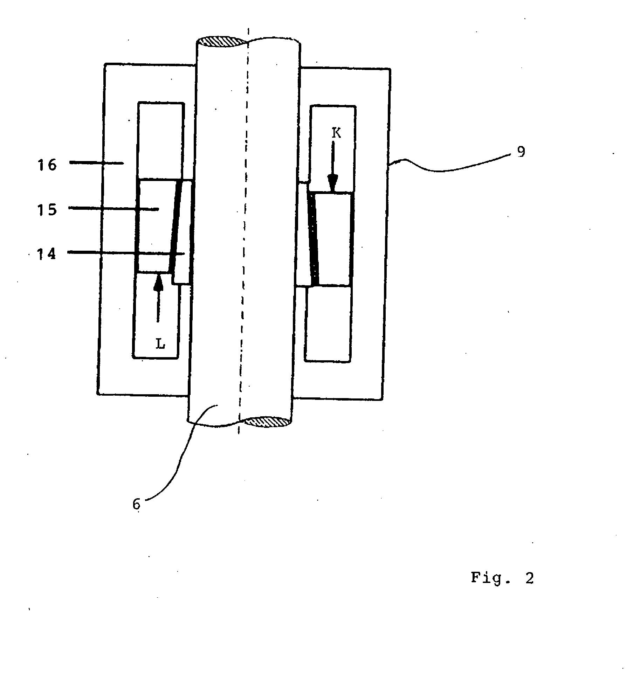

An der unteren Platte 7 sind vorzugsweise mehrere Klemmzylinder 9 derart fest angebracht, dass jeder Kolbenstange 6 bzw. jedem Hydraulikzylinder 5 der oberen Platte ein gegenüberliegender Klemmzylinder 9 geeignet zugeordnet ist. Somit kann bei einer Verstellung der oberen Platte 3 und der unteren Platte 7 aufeinander zu mittels der oben beschriebenen Antriebe und Verstellelemente jede Kolbenstange 6 eines Hydraulikzylinders 5 in einen zugeordneten Klemmzylinder 9 entsprechend eingeführt und mit diesem kraftschlüssig verbunden werden, wobei eine derartige Kopplung weiter unten unter Bezugnahme auf Fig. 2 näher erläutert wird.

Analog zu der oberen Platte 3 kann die untere Platte 7 vorzugsweise ebenfalls mittels zugeordneter Antriebe und Verstellelemente relativ zu dem Rahmen 2 horizontal verfahren werden, um einen gewünschten Thermoformvorgang in Zusammenhang mit der entsprechend ausgerichteten oberen Platte 3 auszuführen. Es ist auch vorstellbar, dass lediglich eine der Platten 3, 7 horizontal verstellbar gelagert ist.

Gemäß dem vorliegenden Ausführungsbeispiel weist die Thermoformmaschine 1 einen Heizmechanismus auf, welcher beispielsweise zwei obere Heizeinrichtungen 10, 11 besitzt, die ebenfalls relativ zu dem Rahmen 2 mittels geeigneter Antriebe und Verstellelemente entsprechend dem jeweils auszuführenden Thermoformvorgang höhenverstellbar sind. Unterhalb der oberen Heizeinrichtung 10, 11 sind vorzugsweise zwei untere Heizeinrichtungen 12, 13 vorgesehen, welche ebenfalls mittels geeigneter Antriebe und Verstellelemente relativ zu dem Rahmen 2 höhenverstellbar sind. Die oberen Heizeinrichtungen 10, 11 und die unteren Heizeinrichtungen 12, 13 sind für eine Erwärmung des thermo zu formenden Materials vor dem Thermoformvorgang vorgesehen.

Im Folgenden wird unter Bezugnahme auf die Figuren 1 und 2 ein Thermoformvorgang mittels der beispielhaften Thermoformmaschine 1 des vorliegenden Ausführungsbeispiels näher erläutert. Der in Fig. 1 dargestellte Zustand der Thermoformmaschine 1 stellt den Maschinenzustand vor dem Thermoformvorgang dar. Vor Beginn des Thermoformvorgangs werden die obere Platte 3 und die untere Platte 7 mittels der oben beschriebenen Antriebe und Verstellelemente aufeinander zu bewegt, beispielsweise wird die obere Platte 3 nach unten in Richtung der unteren Platte 7 und/oder die untere Platte 7 nach oben in Richtung der oberen Platte 3 verfahren. Auf Grund dieser Relativbewegung der oberen Platte 3 und der unteren Platte 7 werden die einzelnen Kolbenstangen 6 der Hydraulikzylinder 5 der oberen Platte 3 in die jeweils zugeordneten und entsprechend unterhalb der Hydraulikzylinder 5 angeordneten Klemmzylinder 9 der unteren Platte 7 eingeführt, wie in Fig. 2 in einer Teilansicht schematisch illustriert ist. Die linke Hälfte der Fig. 2 illustriert den Klemmzylinder 9 dabei in einem gelösten Zustand L und die rechte Hälfte von Fig. 2 den Klemmzylinder 9 in einem geklemmten Zustand K.

Jeder Klemmzylinder 9 kann eine zugeordnete Kolbenstange 6 stufenlos klemmen, ohne dabei deren Position zu verändern, und ferner kann jeder Klemmzylinder 9 in beiden Richtungen axial Kräfte aufnehmen. Die Klemmzylinder 9 werden durch Kraftbeaufschlagung, insbesondere durch hydraulische Kraftbeaufschlagung, aktiviert bzw. deaktiviert. Es ist für einen Fachmann offensichtlich, dass auch eine pneumatische Kraftbeaufschlagung möglich ist.

Die Klemmzylinder 9 bestehen vorzugsweise jeweils aus einer Klemmbuchse 14 mit einem Außenkonus und einer Klemmhülse 15 mit einem Innenkonus, wie in Fig. 2 illustriert ist. Die Klemmbuchse 14 ist vorteilhaft in einem Gehäuse 16 des Klemmzylinders 9 geführt und wird zum Verklemmen der zugeordneten Kolbenstange 6 in axialer Richtung über die Klemmbuchse 14 gepresst. Die dafür notwendige Klemmkraft wird beispielsweise durch die oben bereits genannte hydraulische Druckbeaufschlagung bewerkstelligt.

In Fig. 2 bezeichnet das Bezugszeichen K eine Klemmkraft zum Pressen der Klemmhülse 15 über die Klemmbuchse 14 für ein Verklemmen der eingeführten Kolbenstange 6. Entsprechend bezeichnet das Bezugszeichen L in Fi. 2 eine Kraft zum Lösen der Verklemmung, sodass die eingeführte Kolbenstange 6 reibungsfrei in dem Klemmzylinder 9 gleiten kann.

Durch eine derartige Kopplung der Kolbenstangen 6 mit den jeweils zugeordneten Klemmzylindern 9 wird eine kraftschlüssige Verbindung zwischen den Kolbenstangen 6 und den jeweils zugeordneten Klemmzylindern 9 bzw. zwischen der oberen Platte 3 und der unteren Platte 7 gewährleistet.

Zum Ausführen des Thermoformvorgangs werden nach Bewerkstelligen der oben genannten kraftschlüssigen Verbindung die Hydraulikzylinder 5 der oberen Platte 3 derart angetrieben, dass eine Zugkraft auf die die Klemmzylinder 9 aufweisende untere Platte 7 mit einer vorbestimmten Größe bewerkstelligt wird. Somit wird die untere Platte 7 gegen die obere Platte 3 zum Liefern der notwendigen Verformungskraft zum Thermoformen des erwärmten Materials mittels der vorgesehenen Formabschnitte der oberen Platte 3 und der unteren Platte 7 mit einer vorbestimmten Zugkraft gezogen. Auf Grund der oben beschriebenen kraftschlüssigen Verbindung zwischen den Kolbenstangen 6 und den zugeordneten Klemmzylindern 9 erfolgt vorteilhaft bei Überschreiten eines vorgegebenen Maximalwertes der Zugkraft eine Gleitbewegung der eingeführten Kolbenstangen 6 relativ zu den zugeordneten Klemmzylindern 9. Durch dieses Herausgleiten der Kolbenstangen 6 aus den zugeordneten Klemmzylindern 9 bei Überschreiten einer vorbestimmten Zugkraft wird eine Beschädigung der einzelnen Bauteile verhindert, im Unterschied zu beispielsweise einer formschlüssigen Verbindung zwischen den entsprechenden Bauteilen.

Nach erfolgreich abgeschlossenem Thermoformvorgang wird die auf die untere Platte 7 ausgeübte Zugkraft durch entsprechende Antriebe der Hydraulikzylinder 5 gelöst, die obere Platte 3 und die untere Platte 7 mittels der entsprechenden Antriebe und Stellelemente voneinander weg bewegt und das thermogeformte Werkstück entnommen.

Obwohl die vorliegende Erfindung anhand bevorzugter Ausführungsbeispiele vorstehend beschrieben wurde, ist sie darauf nicht beschränkt, sondern auf vielfältige Weise modifizierbar.

Beispielweise können anstelle von Hydraulikzylindern auch Pneumatikzylinder eingesetzt werden, welche die entsprechenden Zugkräfte gewährleisten. Auch die Anzahl und Anordnung der einzelnen Kolbenzylinder auf der oberen Platte sowie der zugeordneten Klemmzylinder auf der unteren Platte ist beliebig modifizierbar und vorzugsweise derart auszubilden, dass eine gleichförmige Relativbewegung der oberen und der unteren Platten zueinander möglich ist.

Des Weiteren sind auch andere als in Fig. 2 dargestellte Klemmmechanismen zum Liefern einer kraftschlüssigen Kopplung vorstellbar.

### Bezugszeichenliste

- 1: Thermoformmaschine
- 2: Rahmen
- 3: obere Platte
- 4: Kugelrollspindel
- 5: Hydraulikzylinder
- 6: Kolbenstange
- 7: untere Platte
- 8: Kugelrollspindel
- 9: Klemmzylinder
- 10: obere Heizeinrichtung
- 11: obere Heinzeinrichtung
- 12: untere Heizeinrichtung
- 13: untere Heizeinrichtung
- 14: Klemmbuchse
- 15: Klemmhülse
- 16: Gehäuse

## Patentansprüche

1. Thermoformmaschine (1) mit:
einem Rahmen (2);
einer ersten Platte (3) und einer zweiten Platte (7) zum Aufnehmen von Formabschnitten, wobei zumindest eine der Platten (3; 7) relativ zu dem Rahmen (2) verstellbar ist;
und Antriebsmittel (4; 8) zum Verstellen der Platten (3; 7) relativ zueinander; wobei
ein Zugmechanismus (5, 6; 9) zum Ziehen einer der Platten (7) in Richtung der anderen Platte (3) vorgesehen ist, wobei der Zugmechanismus (5, 6; 9) mindestens eine an einer der Platten (3) angebrachte Zugeinrichtung (5) mit einer Zugstange (6) aufweist, welche bei Verstellung der beiden Platten (3; 7) relativ zueinander mit einer zugeordneten, an der anderen der Platten (7) angebrachten Klemmeinrichtung (9) für eine Kopplung verklemmbar ist;
**dadurch gekennzeichnet, dass** die Kopplung kraftschlüssig ist und, dass die erste Platte (3) als obere Platte (3) ausgebildet ist, welche vertikal zu dem Rahmen (2) mittels eines Antriebsmotors und mehreren Spindeln für eine gleichförmige Verstellung der oberen Platte (3) vertikal zu dem Rahmen (2) verstellbar ist.

2. Thermoformmaschine nach Anspruch 1, **dadurch gekennzeichnet, dass** die Spindeln (4) Kugelrollspindeln sind.

3. Thermoformmaschine nach wenigstens einem der vorhergehenden Ansprüche, **dadurch gekennzeichnet, dass** die zweite Platte (7) als unterhalb der oberen Platte (3) angeordnete untere Platte (7) ausgebildet ist, welche vertikal zu dem Rahmen (2) mittels zweiter Antriebsmittel (8) verstellbar ist.

4. Thermoformmaschine nach Anspruch 3, **dadurch gekennzeichnet, dass** die zweiten Antriebsmittel einen Antriebsmotor und mehrere Spindeln (8), insbesondere Kugelrollspindeln, für eine gleichförmige Verstellung der unteren Platte (7) vertikal zu dem Rahmen (2) aufweist.

5. Thermoformmaschine nach Anspruch 3 oder 4, **dadurch gekennzeichnet, dass** die obere Platte (3) und/oder die untere Platte 7 mittels zugeordneter Verstellelemente horizontal zu dem Rahmen (2) verstellbar sind.

6. Thermoformmaschine nach wenigstens einem der Ansprüche 3 bis 5, **dadurch gekennzeichnet, dass** mehrere, vorzugsweise vier, Hydraulikzylinder (5) an der oberen Platte (3) als Zugeinrichtungen und jeweils zugeordnete Klemmeinrichtungen in Form von Klemmzylindern (9) an der unteren Platte (7) angebracht sind.

7. Thermoformmaschine nach Anspruch 6, **dadurch gekennzeichnet, dass** jede Kolbenstange (6) eines Hydraulikzylinders (5) der oberen Platte (3) bei Verstellung der Platten (3, 7) in Richtung aufeinander zu in einem jeweils zugeordneten Klemmzylinder (9) der unteren Platte (7) einführbar und jeweils kraftschlüssig mit einer derartigen Klemmkraft verklemmbar ist, dass bei Überschreiten einer vorbestimmten Zugkraft die Kolbenstangen (6) aus den zugeordneten Klemmzylindern (9) heraus gleiten.

8. Thermoformmaschine nach wenigstens einem der Ansprüche 3 bis 7, **dadurch gekennzeichnet, dass** bei Betätigung der zugeinrichtungen (5) der oberen Platte (3) die über die Klemmeinrichtungen (9) kraftschlüssig gekoppelte untere Platte (7) in Richtung der oberen Platte (3) mit einer vorbestimmten Zugkraft ziehbar ist.

9. Thermoformmaschine nach wenigstens einem der vorhergehenden Ansprüche, **dadurch gekennzeichnet, dass** die Klemmeinrichtungen (9) jeweils als hydraulische oder pneumatische Klemmzylinder (9) ausgebildet sind, welche jeweils eine Klemmbuchse (14) mit einem Außenkonus und eine Klemmhülse (15) mit einem Innenkonus aufweisen, wobei die Klemmbuchse (14) jeweils in einem Gehäuse (16) der zugeordneten Klemmeinrichtung (9) axial fixiert und radial beweglich ist und die jeweilige Klemmhülse (15) in dem Gehäuse (16) axial geführt ist und zum Verklemmen einer zugeordneten, in der jeweiligen Klemmeinrichtung (9) aufgenommenen Kolbenstange (6) in axialer Richtung über die jeweils zugeordnete Klemmbuchse (14) mittels vorbestimmter Kraftbeaufschlagung schiebbar ist.

10. Thermoformmaschine nach wenigstens einem der Ansprüche 3 bis 9, **dadurch gekennzeichnet, dass** die Thermoformmaschine (1) mindestens eine obere Heizeinrichtung (10, 11), welche unterhalb der oberen Platte (3) vorgesehen ist, und mindestens eine untere Heizeinrichtung (12, 13) aufweist, welche oberhalb der unteren Platte (7) vorgesehen ist, wobei zumindest eine der Heizeinrichtungen (10, 11; 12, 13) mittels einer zugeordneten Verstelleinrichtung vertikal zu dem Rahmen (2) verstellbar ist und mehrere unabhängige Abschnitte, vorzugsweise zwei nebeneinander angeordnete Heizabschnitte (10, 11; 12, 13), besitzt.

## Claims

1. Thermoforming machine comprising:
a frame (2);
a first plate (3) and a second plate (7) for receiving form sections, wherein at least one of the plates (3' ; 7) is adjustable relative to the frame (2);
and drive means (4; 8) for adjusting the plates (3; 7) relative to each other; wherein
a pulling mechanism (5, 6; 9) for pulling one of the plates (7) in the direction of the other plate (3) is provided, wherein the pulling mechanism (5, 6; 9) comprises at least one pulling device (5) mounted to one of the plates (3), the pulling device (5) comprising a pulling rod (6), which can be clamped with an associated clamping device (9) mounted at the other of the plates (7), when adjusting the two plates (3; 7) relative to each other; **characterized in that** the coupling is a friction locked coupling and **in that** the first plate (3) is formed as an upper plate (3), which is vertically adjustable relative to the frame (2) by means of a drive motor and several spindles for a smooth adjustment of the upper plate (3), vertical to the frame (2).

2. Thermoforming machine according to claim 1, **characterized in that** the spindles (4) are ball screw spindles.

3. Thermoforming machine according to claim 1 or 2, **characterized in that** the second plate (7) is provided as a lower plate (7) disposed below the upper plate (3) which is vertically adjustable relative to the frame (2) by means of second drive means (8).

4. Thermoforming machine according to claim 3, **characterized in that** the second drive means comprise a drive motor and several spindles (8), in particular ball screw spindles, for a smooth adjustment of the lower plate (7), vertical to the frame (2).

5. Thermoforming machine according to claim 3 or 4, **characterized in that** the upper plate (3) and/or the lower plate (7) are adjustable in a horizontal manner relative to the frame (2) by means of associated adjustment elements.

6. Thermoforming machine according to at least one of claims 3 to 5, **characterized in that** several, in particular four, hydraulic cylinders (5) are disposed at the upper plate (3) as pulling devices, and respective associated clamping devices formed as clamping cylinders (9) are mounted at the lower plate (7).

7. Thermoforming machine according to claim 6, **characterized in that** each piston rod (6) of a hydraulic cylinder (5) of the upper plate (3) is insertable into a respective associated clamping cylinder (9) of the lower plate (7), when adjusting the plates (3, 7) towards each other, and can be clamped respectively in a friction locked manner with such a clamping force that the piston rods (6) slide out of the associated clamping cylinders (9) when a predetermined pulling force is exceeded.

8. Thermoforming machine according to at least one claims 3 to 7, **characterized in that** when operating the pulling devices (5) of the upper plate (3) the lower plate (7), coupled via the clamping devices (9) in a friction locked manner, can be pulled in a direction of the upper plate (3) with a predetermined pulling force.

9. Thermoforming machine according to at least one of the preceding claims, **characterized in that** the clamping devices (9) are hydraulic or pneumatic clamping cylinders (9), each having a respective clamping bushing (14) with an outer cone, and a clamping sleeve (15) with an inner cone, wherein the clamping bushing (14) is axially fixated in a respective housing (16) of the associated clamping device (9), and radially movable, and the clamping sleeve (15) is axially guided in the housing (16), and slideable in axial direction by means of predetermined force loading for clamping an associated piston rod (6), received in the clamping device (9), through the associated clamping bushing (14).

10. Thermoforming machine according to at least one of claims 3 to 9, **characterized in that** the thermoforming machine (1) includes at least one upper heating device (10, 11), which is provided below the upper plate (3), and at least one lower heating device (12, 13), which is provided above the lower plate (7), wherein at least one of the heating devices (10, 11; 12, 13) is vertically adjustable relative to the frame (2) by means of an associated adjustment device, and has a plurality of independent sections, in particular two independent heating sections (10, 11; 12, 13), disposed next to each other.

## Revendications

1. Presse de thermoformage (1) comprenant :
- un bâti (2) ;
- une première plaque (3) et une seconde plaque (7) permettant de recevoir des sections de moule, au moins une des plaques (3 ; 7) pouvant être déplacée par rapport au bâti (2),
- et des moyens d'entraînement (4 ; 8) permettant de déplacer les plaques (3 ; 7) l'une par rapport à l'autre, un mécanisme de traction (5, 6 ; 9) permettant de tirer une des plaques (7) en direction de l'autre plaque (3) étant prévu, le mécanisme de traction (5, 6 ; 9) présentant au moins un dispositif de traction (5) fixé à une des plaques (3) et doté d'une tige de traction (6) laquelle peut, lors du déplacement des deux plaques (3 ; 7) l'une par rapport à l'autre, être serrée dans un dispositif de serrage (9) associé, fixé à l'autre des plaques (7), pour former un accouplement,
**caractérisée en ce que**
l'accouplement est à force et **en ce que** la première plaque (3) est conçue comme une plaque supérieure (3) qui peut être déplacée verticalement par rapport au bâti (2) à l'aide d'un moteur d'entraînement et de plusieurs broches pour assurer un déplacement uniforme de la plaque supérieure (3) verticalement par rapport au bâti (2).

2. Presse de thermoformage selon la revendication 1, **caractérisée en ce que** les broches (4) sont des broches filetées à billes.

3. Presse de thermoformage selon au moins une des revendications précédentes, **caractérisée en ce que** la seconde plaque (7) est conçue comme une plaque inférieure (7) disposée au-dessous de la plaque supérieure (3) et qui peut être déplacée verticalement par rapport au bâti (2) à l'aide de seconds moyens d'entraînement (8).

4. Presse de thermoformage selon la revendication 3, **caractérisée en ce que** les seconds moyens d'entraînement présentent un moteur d'entraînement et plusieurs broches (8), en particulier des broches filetées à billes, pour assurer un déplacement uniforme de la plaque inférieure (7) verticalement par rapport au bâti (2).

5. Presse de thermoformage selon la revendication 3 ou 4, **caractérisée en ce que** la plaque supérieure (3) et/ou la plaque inférieure (7) peuvent être déplacées horizontalement par rapport au bâti (2) à l'aide de moyens de déplacement associés.

6. Presse de thermoformage selon au moins une des revendications 3 à 5, **caractérisée en ce que** plusieurs vérins hydrauliques (5), de préférence quatre, sont fixés à la plaque supérieure (3) en tant que dispositifs de traction et des dispositifs de serrage respectivement associés, ayant la forme de vérins de serrage (9), sont fixés à la plaque inférieure (7).

7. Presse de thermoformage selon la revendication 6, **caractérisée en ce que** chaque tige de piston (6) d'un vérin hydraulique (5) de la plaque supérieure (3) peut, lors du déplacement des plaques (3, 7) l'une envers l'autre, être introduite dans un vérin de serrage (9) respectivement associé de la plaque inférieure (7) et peut dans chaque cas être serrée par adhérence avec une force de serrage telle qu'en cas de dépassement d'une force de traction prédéfinie, les tiges de piston (6) glissent hors des vérins de serrage (9) associés.

8. Presse de thermoformage selon au moins une des revendications 3 à 7, **caractérisée en ce qu'**en cas d'actionnement des dispositifs de traction (5) de la plaque supérieure (3), la plaque inférieure (7) accouplée par adhérence via les dispositifs de serrage (9) peut être tirée en direction de la plaque supérieure (3) à une force de traction prédéfinie.

9. Presse de thermoformage selon au moins une des revendications précédentes, **caractérisée en ce que** les dispositifs de serrage (9) sont chacun conçus sous forme de vérins de serrage hydrauliques ou pneumatiques (9), qui présentent chacun une douille de serrage (14) dotée d'un cône extérieur et une douille de serrage (15) dotée d'un cône intérieur, la douille de serrage (14) étant à chaque fois fixée axialement et à mobilité radiale dans un carter (16) du dispositif de serrage associé (9), et la douille de serrage respective (15) étant guidée axialement dans le carter (16) et, pour le serrage d'une tige de piston (6) associée, logée dans le dispositif de serrage respectif (9), pouvant être poussée dans le sens axial par la douille de serrage (14) respectivement associée avec une sollicitation en force prédéfinie.

10. Presse de thermoformage selon au moins une des revendications 3 à 9, **caractérisée en ce que** la presse de thermoformage (1) présente au moins un dispositif de chauffage supérieur (10, 11), qui est prévu au-dessous de la plaque supérieure (3), et au moins un dispositif de chauffage inférieur (12, 13), qui est prévu au-dessus de la plaque inférieure (7), au moins un des deux dispositifs de chauffage (10, 11 ; 12, 13) pouvant être déplacé verticalement par rapport au bâti (2) à l'aide d'un dispositif de déplacement associé et possédant plusieurs sections indépendantes, de préférence deux sections de chauffage (10, 11 ; 12, 13) disposées l'une à côté de l'autre.
